# EUROPEAN PATENT APPLICATION

(11) **EP 2 975 374 A1**
(43) Date of publication of application: **20.01.2016**
(21) Application number: 14200673.3
(22) Date of filing: 30.12.2014
(51) Int. Cl.: G01L 5/22, G01L 1/18, G01L 1/20, G06F 3/041, G06F 3/045

(54) **Pressure sensor for touch panel**

(30) Priority: 14.07.2014 KR 20140088447
(71) Applicant: Core Logic Inc., Seongnam-si Gyeonggi-do 463-400 (KR)
(72) Inventor: Yang, Young-Bae, Seongnam-si, Gyeonggi-do 463-420 (KR); Jung, Dong-Gju, Seongnam-si, Gyeonggi-do 443-280 (KR)
(74) Representative: Misselbrook, Paul

(57) **Abstract**

The present invention relates to a pressure sensor for a touch panel which can effectively prevent a touch input error. The pressure sensor includes a signal input member having a conductor patterned on a substrate in an interdigitating shape; a spacer arranged on a brim where the conductor pattern on the substrate of the signal input means is not formed; and a piezo film arranged on the spacer to be spaced apart from the signal input member, a resistance value of which changes according to magnitude of pressure, in which a space D1 of the conductor pattern of the signal input member placed in an area adjacent to the spacer is smaller than a space D2 of the conductor pattern of the signal input member placed in an area farthest from the spacer, and an exhaustion hole exposed to outside is formed in an area in which the conductor of the signal input member is not patterned.

## Description

### BACKGROUND OF THE INVENTION

### Field of the Invention

The present invention relates to a pressure sensor for a touch panel, and more specifically, to a pressure sensor for a touch panel, which can be promptly restored to an original state when pressure is released while effectively preventing a touch input error regardless of a position of touch input.

### Background of the Related Art

Generally, a keyboard is widely used in a device such as a PC or a network terminal as a means for interface between the device and a user.

Most of keyboards have a mechanical structure, in which a spring and a switch are installed under a key manufactured using a molded material, so that when a user strikes the key with a predetermined strength, elastic force of the spring is overcome and the switch is handled, and thus a key input is accomplished.

On the other hand, other than the keyboards having such a mechanical structure, keyboards using a touch panel method have come into existence. A keyboard using a touch panel method has a technical means for sensing and recognizing whether or not a human body (a finger) or a pen is touched on the keyboard using detection of current of the human body, change of pressure or temperature or the like. Particularly, a touch panel using a method of sensing touch of a human body or a pen using change of pressure is spotlighted.

Meanwhile, a touch panel employing such a pressure sensor has a piezo film arranged on the top surface of a spacer, and there is a problem in that touch input is not applied well in an area adjacent to the spacer due to the spacer described above.

A background technique of the present invention is disclosed in Korean Patent Registration No. 10-1094165 registered on December 08, 2011.

### SUMMARY OF THE INVENTION

Therefore, the present invention has been made in view of the above problems, and it is an object of the present invention to provide a pressure sensor for a touch panel, in which a conductor pattern of a signal input member placed in an area adjacent to a spacer is arranged more densely compared to a conductor pattern placed in an area farthest from the spacer so that a touch input may be effectively delivered regardless of a position of the touch input owing to uniform touch pressure, and an exhaustion hole is formed in an area in which the conductor pattern of the signal input member is not arranged so that the pressure sensor may be promptly restored to an original state when the pressure is released.

To accomplish the above object, according to one aspect of the present invention, there is provided a pressure sensor for a touch panel, the pressure sensor including: a signal input member having a conductor patterned on a substrate in an interdigitating shape; a spacer arranged on a brim where the conductor pattern on the substrate of the signal input means is not formed; and a piezo film arranged on the spacer to be spaced apart from the signal input member, a resistance value of which changes according to magnitude of pressure, in which a space D1 of the conductor pattern of the signal input member placed in an area adjacent to the spacer is smaller than a space D2 of the conductor pattern of the signal input member placed in an area farthest from the spacer, and an exhaustion hole exposed to outside is formed in an area in which the conductor of the signal input member is not patterned.

Preferably, in the pressure sensor for a touch panel according to an embodiment of the present invention, the space D1 of the conductor pattern of the signal input member placed in an area adjacent to the spacer is 0.2 to 0.6 times as large as the space D2 of the conductor pattern of the signal input member placed in an area farthest from the spacer.

Preferably, in the pressure sensor for a touch panel according to an embodiment of the present invention, height H of the spacer is between 0.05 and 0.15mm.

### BRIEF DESCRIPTION OF THE DRAWINGS

FIG. 1 is a perspective view showing a pressure sensor for a touch panel according to an embodiment of the present invention.
FIG. 2 is a cross-sectional view showing a pressure sensor for a touch panel according to an embodiment of the present invention.

### DESCRIPTION OF SYMBOLS

| | |
|---|---|
| 1100: Piezo film | 1200: Spacer |
| 1300: Signal input member | 1310: Conductor pattern |
| 1320: Conductor pattern | 1341 to 1344: Exhaustion holes |

### DETAILED DESCRIPTION OF THE PREFERRED EMBODIMENT

Details of other embodiments are included in the detailed description and he accompanying drawings.

Advantages and features of the present invention and a method of achieving the same will be more clearly understood from embodiments described below with reference to the accompanying drawings. However, the present invention is not limited to the following embodiments but may be implemented in various different forms. The embodiments are provided merely to complete disclosure of the present invention and to fully provide a person having ordinary skill in the art to which the present invention pertains with the category of the invention. The invention is defined only by the category of the claims. Wherever possible, the same reference numbers will be used throughout the specification to refer to the same or like parts.

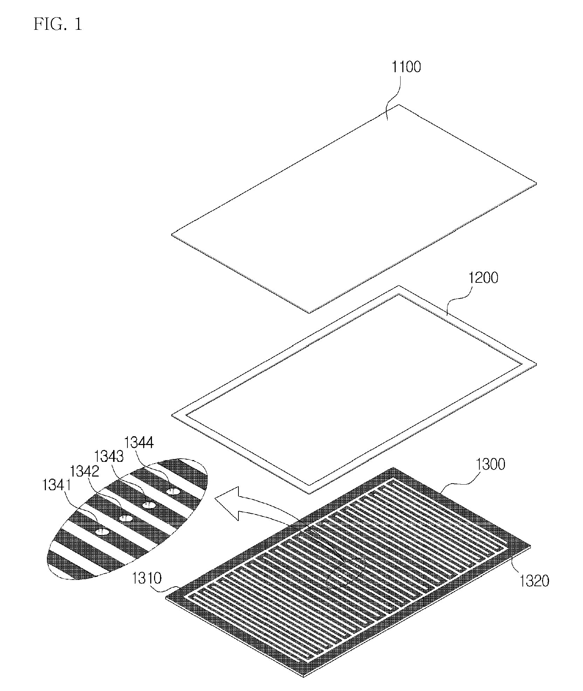

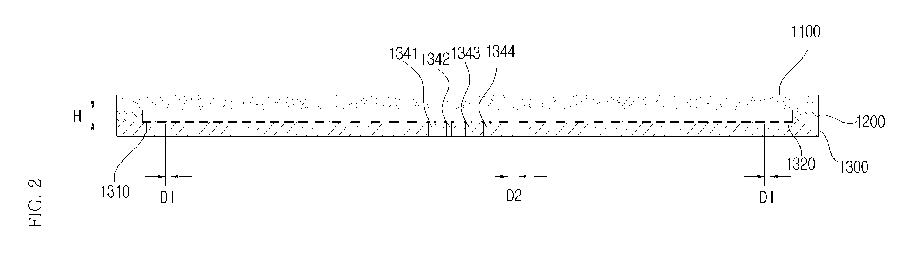

As shown in FIGs. 1 and 2, a pressure sensor for a touch panel according to an embodiment of the present invention is configured to include a signal input member 1300, a spacer 1200 and a piezo film 1100.

As shown in FIG. 1, the signal input member 1300 has a conductor patterned on a substrate in an interdigitating shape.

Here, one conductor pattern 1310 is formed in a shape of parallel teeth of a comb to be connected from the bottom, and another conductor pattern 1320 is formed in a shape of parallel teeth of a comb to be connected from the top and arranged as if interdigitating with the one conductor pattern 1310.

In addition, exhaustion holes 1341, 1342, 1343 and 1344 exposed to outside are formed in an area in which the conductor of the signal input member is not patterned.

The spacer 1200 is arranged on the brim where the conductor patterns 1310 and 1320 on the substrate of the signal input means 1300 are not formed.

Meanwhile, the piezo film 1100 is arranged on the spacer 1200 to be spaced apart from the signal input member 1300, and a resistance value decreases if applied pressure increases, and the resistance value increases if the applied pressure decreases.

If a touch is applied on the piezo film 1100, the resistance value changes according to the magnitude of touch pressure, and as described above, if the touch pressure increases, the resistance value decreases, and thus applied power voltage decreases, so that a key input can be sensed.

Here, in the pressure sensor for a touch panel according to an embodiment of the present invention, the space D1 of the conductor patterns 1310 and 1320 of the signal input member 1300 placed in an area adjacent to the spacer 1200 is smaller than the space D2 of the conductor patterns 1310 and 1320 of the signal input member 1300 placed in an area farthest from the spacer 1200.

Specifically, the space D1 of the conductor patterns 1310 and 1320 of the signal input member 1300 placed in an area adjacent to the spacer 1200 is 0.2 to 0.6 times as large as the space D2 of the conductor patterns 1310 and 1320 of the signal input member 1300 placed in an area farthest from the spacer 1200.

When the space D1 of the conductor patterns 1310 and 1320 of the signal input member 1300 placed in an area adjacent to the spacer 1200 is equal to the space D2 of the conductor patterns 1310 and 1320 of the signal input member 1300 placed in an area farthest from the spacer 1200, touch pressure is not sufficiently delivered to the conductor patterns 1310 and 1320 placed in an area adjacent to the spacer 1200 due to the spacer 1200, and thus a touch input error may occur.

However, in the pressure sensor for a touch panel according to an embodiment of the present invention, since the conductor patterns 1310 and 1320 of the signal input member 1300 placed in an area adjacent to the spacer 1200 are arranged more densely compared to the conductor patterns 1310 and 1320 of the signal input member 1300 placed in an area farthest from the spacer 1200 as described above, although a small pressure is delivered to the conductor patterns 1310 and 1320 placed in an area adjacent to the spacer 1200 due to the spacer 1200, the touch input error may be effectively suppressed.

In addition, in the pressure sensor for a touch panel according to an embodiment of the present invention, since the exhaustion holes 1341, 1342, 1343 and 1344 exposed to outside are formed in an area in which the conductor of the signal input member is not patterned, the air sealed between the piezo film 1100, the spacer 1200 and the signal input member 1330 can be promptly exhausted through the exhaustion holes 1341, 1342, 1343 and 1344, and thus the piezo film 1100 can be promptly restored to an original state when the pressure is released.

Meanwhile, in the pressure sensor for a touch panel according to an embodiment of the present invention, since height H of the spacer 1200 is adjusted between 0.05 and 0.15mm, the pressure sensor can be manufactured to be sufficiently thin while effectively delivering pressure of a touch input to the conductor patterns 1310 and 1320.

In the pressure sensor for a touch panel according to an embodiment of the present invention, a conductor pattern of a signal input member placed in an area adjacent to a spacer is arranged more densely compared to a conductor pattern placed in an area farthest from the spacer so that a touch input may be effectively delivered regardless of a position of the touch input owing to uniform touch pressure, and an exhaustion hole is formed in an area in which the conductor pattern of the signal input member is not arranged so that the pressure sensor may be promptly restored to an original state when the pressure is released.

Those skilled in the art may understand that the present invention may be embodied in other specific forms without changing the technical scope and essential features of the present invention. Therefore, it should be understood that the embodiments described above are presented for purposes of examples rather than limitation in all aspects. The scope of the present invention should be determined by the appended claims described below rather than the above detailed description, and all changes and modified forms derived from the meaning and scope of the claims and equivalent concepts thereof should be interpreted to be embraced in the scope of the present invention.

## Claims

1. A pressure sensor for a touch panel, the pressure sensor comprising:
a signal input member having a conductor patterned on a substrate in an interdigitating shape;
a spacer arranged on a brim where the conductor pattern on the substrate of the signal input means is not formed; and
a piezo film arranged on the spacer to be spaced apart from the signal input member, a resistance value of which changes according to magnitude of pressure, wherein
a space D1 of the conductor pattern of the signal input member placed in an area adjacent to the spacer is smaller than a space D2 of the conductor pattern of the signal input member placed in an area farthest from the spacer, and
an exhaustion hole exposed to outside is formed in an area in which the conductor of the signal input member is not patterned.

2. The pressure sensor according to claim 1, wherein the space D1 of the conductor pattern of the signal input member placed in an area adjacent to the spacer is 0.2 to 0.6 times as large as the space D2 of the conductor pattern of the signal input member placed in an area farthest from the spacer.

3. The pressure sensor according to claim 1, wherein height H of the spacer is between 0.05 and 0.15mm.
